# EUROPEAN PATENT APPLICATION

(11) **EP 0 733 828 A2**
(43) Date of publication of application: **25.09.1996**
(21) Application number: 96301986.4
(22) Date of filing: 22.03.1996
(51) Int. Cl.: F16H 25/18

(54) **Motion transducer**

(30) Priority: 23.03.1995 IL 11310595
(71) Applicant: STATE OF ISRAEL MINISTRY OF DEFENCE RAFAEL ARMAMENT DEVELOPMENT AUTHORITY, Haifa 31 021 (IL)
(72) Inventor: Yehezkely, Oded, Kiryat, Tivon (IL)
(74) Representative: West, Alan Harry

(57) **Abstract**

A device for producing angular displacements about an axis in response to thrust exerted along the said axis comprises, in combination, a housing (20) having a cylindrical bore (25) therein; a core (10) of an essentially cylindrical shape, fitting into said bore (25) of said housing (20) and axially and angularly displaceable with respect thereto, in response to an axial thrust, between an inoperative condition and an operative position, said core being provided on its surface with at least one groove (13) having a substantially helicoidal portion (16); and a guide member (30) for each of said grooves (13), said guide member (30) projecting into said cylindrical bore (25) and engaging said groove (13).

## Description

This invention relates to motion transducers, more particularly to devices for producing rapid angular displacements about an axis in response to thrust exerted along the said axis. The device according to the invention has a number of industrial applications, for instance actuating a safety valve or other safety devices in response to an increase of pressure within a container, causing a cam quickly to pass from one side of a dead point to another, and the like.

In mechanical and electromechanical devices it is sometimes necessary to cause a member to rotate about an axis in response to a thrust exerted on it along the same axis. In many cases it is required that the rotation be very rapid, and further, that the device be stable and in the absence of the thrust should remain locked in a fixed position.

Problems of this kind are usually solved by electromechanical means. Thrust axially exerted on a mechanical element will cause the element to shift along its axis and, in so doing, the element may produce an electrical contact or actuate a switch and this in turn may actuate, e.g., a motor to cause a desired rotation. However, such means may not be effective when a very rapid rotation is desired, e.g. to actuate a safety device: or when the desired rotation can only be achieved by overcoming a substantial resistance; or when temperature, moisture and other conditions make electrical devices unsafe and susceptible to failure or malfunction; or, finally, when their use is not possible because of space limitations.

It is a purpose of this invention to provide a device which will produce a limited, very rapid angular displacement of a mechanical element about an axis, in response to a thrust along that axis.

It is another purpose of the invention to provide such a device which is irreversible.

It is a further purpose of the invention to provide such a device which is stable against any force that may be exerted on it, except the particular thrust to which it is to respond.

It is a still further purpose of the invention to provide such a device that is not susceptible to failure or to malfunction even under the most extreme environmental conditions.

It is a still further purpose of the invention to provide such a device that is of very limited size.

It is a still further purpose of the invention to provide such a device that is simple in construction, compact and extremely sturdy.

Other purposes and advantages of the invention will be understood as the description proceeds.

The device according to the invention is characterized in that it comprises, in combination, a housing having a cylindrical bore therein; a core of an essentially cylindrical shape, fitting into said bore of said housing and axially and angularly displaceable with respect thereto, in response to an axial thrust, between an inoperative condition and an operative position, said core being provided on its surface with at least one groove and preferably a plurality of grooves, having a substantially helicoidal portion; and a guide member for each of said grooves, said guide member projecting into said cylindrical bore and engaging said groove; said core further having means for actuating, when displaced to its operative position, any desired device (hereinafter referred to as "controlled device"). Means are provided for preventing displacement of said core in a direction opposite to that of its displacement from said inoperative position to said operative position, said means preferably comprising a closed, substantially rectilinear, terminal axial portion of said groove or grooves.

Means are preferably provided in the device for preventing said core from being displaced beyond said operative position, and these means may either limit the axial or the angular displacement of said core. thus providing self-locking properties.

Means are provided in said core for receiving an axial thrust. which means preferably consist in a surface preferably provided at one end of said core.

The means for actuating, when said core is displaced to its operative position, the controlled device, preferably comprise an arm carried by the core at or in the vicinity of one end, preferably the end opposite to that at which the thrust receiving surface is provided, if such is provided.

The controlled device is not part of the invention and may be of any desired kind, as long as it can be actuated by the angular displacement of said core.

The guide members may be a part of the housing, but in a preferred embodiment of the device they are attachable to it in fixed positioned relationship, and still more preferably they are pins that can be inserted into seats of the housing. In a more preferred embodiment of the invention, said seats are radial seats opening into the cylindrical bore of the housing. Still more preferably, said radial seats are cylindrical, the portion of each of said pins inserted in the corresponding seat is cylindrical, and the portion of each of said pins engaging the corresponding groove of said core is bounded by convex arcuate surfaces.

In the drawings:
- Fig. 1 is a lateral view of the core of the device according to an embodiment of the invention and Fig. 1a is a detail thereof, shown at an enlarged scale in cross-section;
- Fig. 2 is a transverse cross-section of the core of Fig. 1, taken on the plane II-II of Fig. 1;
- Fig. 3 is a plane view of the core of Fig. 1 taken from the side of the arm thereof;
- Fig. 4 is a plane view of the same core taken from the end opposite to that of Fig. 3;
- Fig. 5 is a plane view of the housing of the device according to an embodiment of the invention;
- Fig. 6 is an axial cross-section thereof, taken on plane VI-VI of Fig. 5;
- Fig. 7 is a lateral view of the core of Fig. 5;
- Fig. 8 is a cross-section of the core of Figs. 5 to 7, taken on the plane VIII-VIII of Fig. 7;
- Fig. 9 is a lateral view of the assembled device, shown in its normal. inoperative position;
- Fig. 10 is a cross-section of the device of Fig. 9, taken on plane X-X;
- Fig. 11 is a view similar to Fig. 9 but showing the device in its operative position;
- Fig. 12a is cross-section of Fig. 9 taken on plane XIIa-XIIa, loooking in the direction of the arrows and Fig. 12b is a cross-section of Fig. 10 taken on plane XIIb-XIIb, loooking in the direction of the arrows;
- Fig. 13 is a lateral view of a guide pin according to an embodiment of the invention;
- Figs. 14 and 15 are cross-sections of the pin of Fig. 13 taken on planes XIV-XIV and XV-XV respectively, looking in the direction of the arrows;
- Fig. 16 is a diagramatic illustration of means for limiting the axial displacement of the core beyond the position of Fig. 11;
- Fig. 17 is a diagramatic illustration of a parameter of the device according to the invention; and
- Fig. 18 is a diagram illustrating the kinematic behavior of the device of Figs. 1-12.

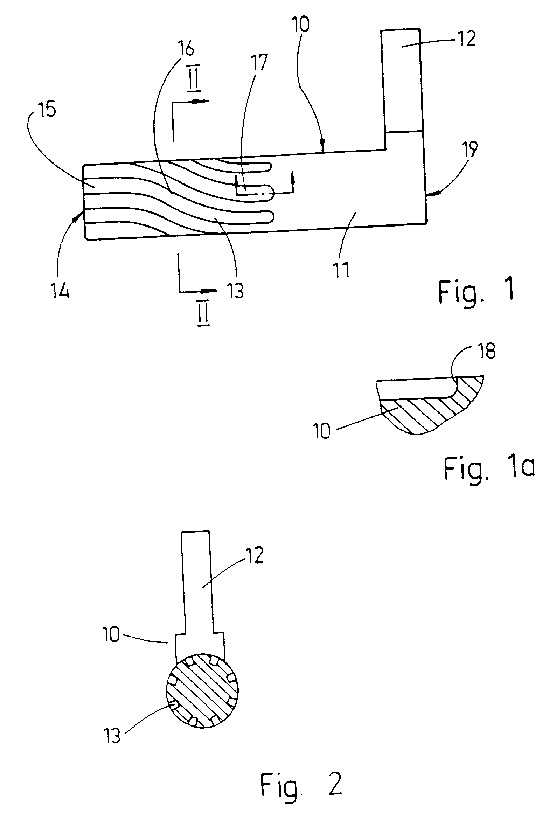

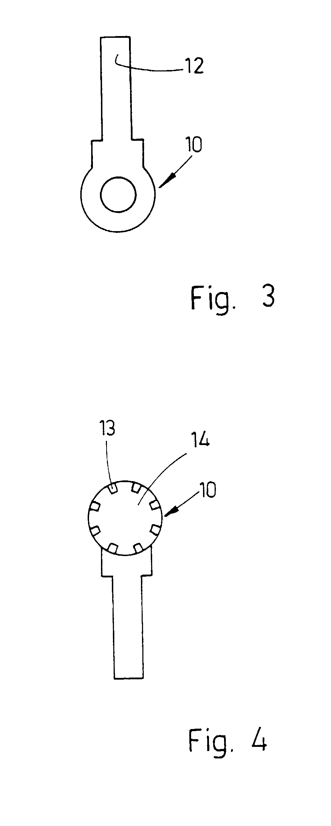

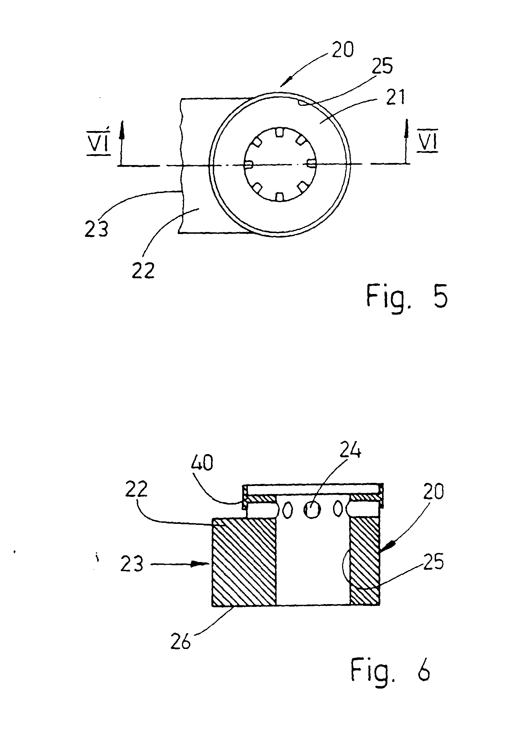

In the preferred embodiment illustrated in the drawings, the device according to the invention comprises a core 10 (separately illustrated in Figs. 1-4) and a housing 20 (separately illustrated in Figs. 5-8). Core 10 comprises a substantially cylindrical portion 11 and an arm 12. This latter may have any desired shape and the shape shown in the figures has no particular significance. The terminal surface of core 11, indicated at 14, at the opposite end of arm 12 is a thrust surface, as will later be better explained. Cylindrical portion 11 has defined therein grooves 13, which in the examples shown are in the number of eight, but may be in any desired number and even be a single one. One of said grooves is visible in its entirety in Fig. 1 and its configuration can thus be understood. In this preferred embodiment of the invention, the initial portion of any groove 13, starting from first surface 14, is rectilinear or substantially rectilinear. That portion is indicated in Fig. 1 by numeral 15. It is followed by a substantially helical or helicoidal portion 16 with a shoulder 18, as shown in the detail of Fig. 1a. The portion 17 of groove 13 adjacent to shoulder 18 is essentially rectilinear but may be very short, and might in fact be missing altogether, the axis of the groove being merely tangent to the axial direction in the vicinity of shoulder 18. Grooves 13 have a substantially rectangular cross-section, as shown in Fig. 2, but this is not necessary, and the shape of said cross-section might be changed if desired.

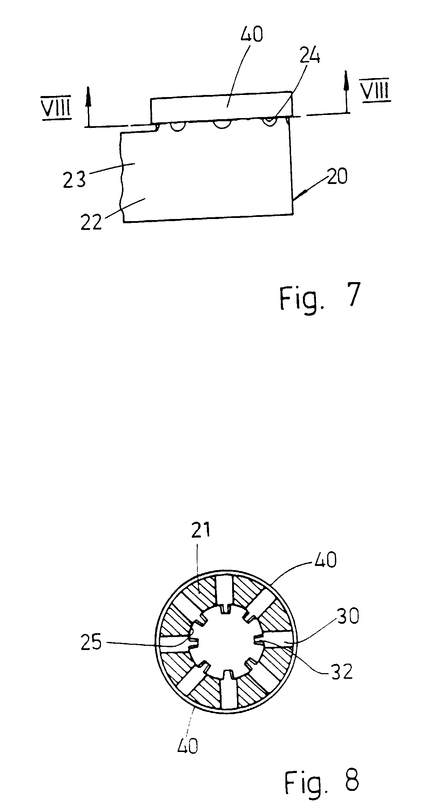

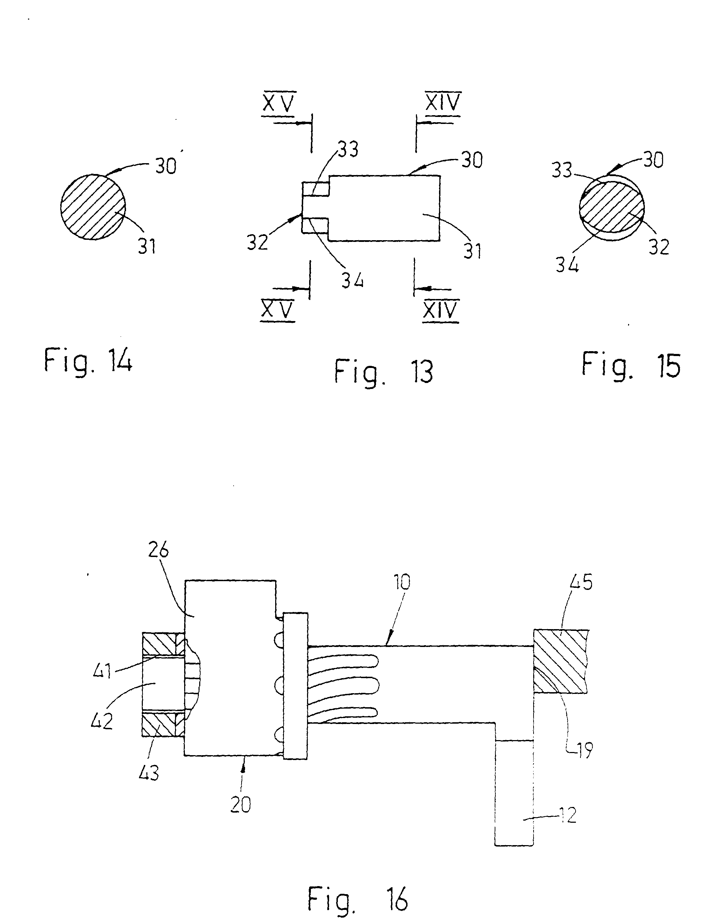

The housing 20 comprises a substantially cylindrical body 21, which may be attached in any convenient way to any frame or support. In the embodiment illustrated, the means for attaching it are indicated as a lateral projection 22, shown as broken off at 23, since it may have any desired configuration and be attached by any desired means to a frame or support. The cylindrical portion 21 is provided with seats for guide members adapted to engage grooves 13 of core 11 and guide said core in its displacement. In the embodiment illustrated. said guide members are pins 30, illustrated in Figs. 13 to 15. In said embodiment the said seats of said core 20 are circular bores as shown in Fig. 6, indicated by 24, and the pins 30 have a cylindrical portion 31, which can be seated in bore 24 and freely rotate therein, and a shaped portion 32, which protrudes within the cylindrical space enclosed by the inner surface 25 of housing 20 and engages a groove 13 and is illustrated in cross-section in Fig. 14. As seen therein, said portion 32 is bound by two arcuate surfaces 33-34. It is desirable that the radius of curvature of said surfaces be as high as possible, preferably substantially greater then d/2, wherein d is the diameter of the cylindrical portion 31 of the pin, this in order to minimize the pressure stressses between pin and groove 13, at the point of contact, viz. at the center of the arcuate surfaces 33-34. Means are provided for retaining pins 30 within bores 24, and, in the embodiment illustrated, they consist of a ring 40, which can be slipped onto the cylindrical portion 21 of housing 20 in such a way as to cover bores 24 at least partially.

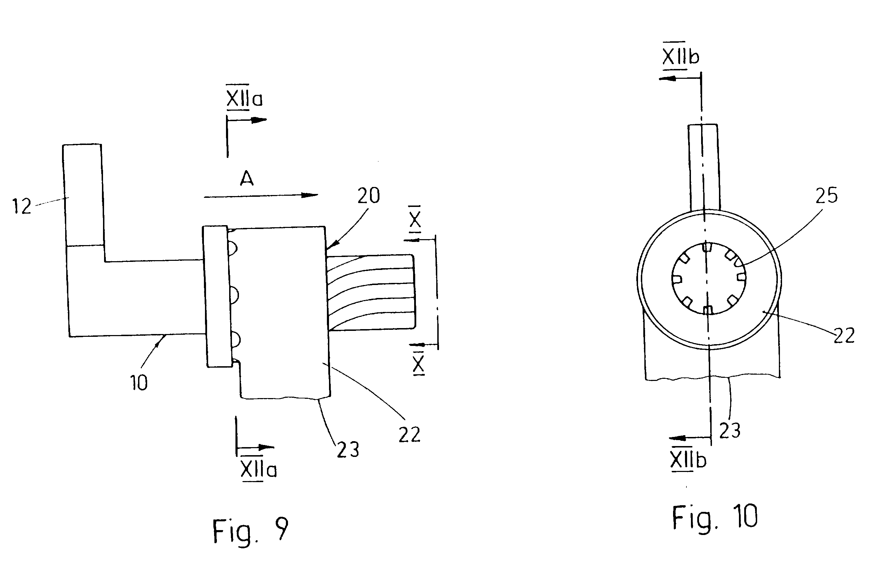

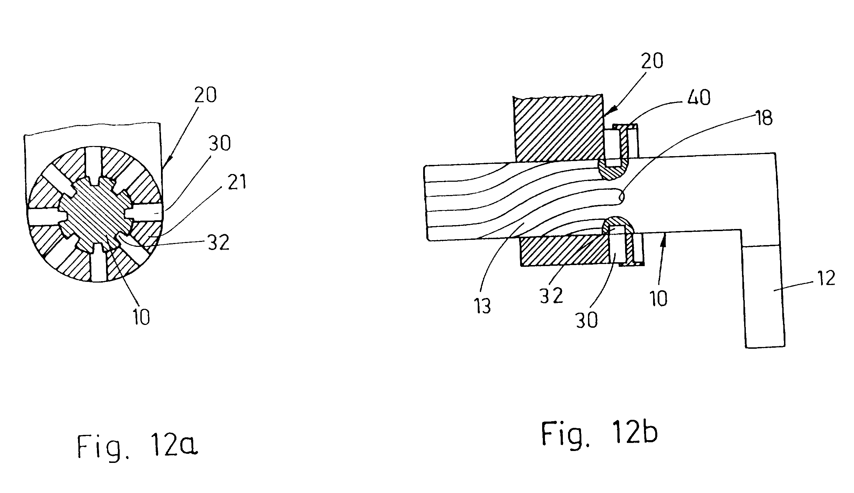

Core 10 is displaceable within housing 20 from an inoperative and an operative position. The inoperative position is shown in Figs. 9, 10, 12a and 12b. In that position, core 10 is inserted within the circular opening of housing 20, its outer surface slideably engages the inner surface 25 of said space, pins 30 are inserted in the bores 24 of said housing and the shaped portions 32 thereof are engaged with grooves 13. The core is inserted into housing 20 as far as it will go. viz. until pins 30 engage shoulders 18 of grooves 13 and prevent any further displacement in the direction indicated by the arrow A of Fig. 9. In this position the pins 30 engage terminal portion 17 of grooves 13 and shoulders 18. Since portion 17 is rectilinear and axial or tangent to an axial direction, any moment or tangential thrust exerted on arm 12 will produce no rotation of the core and no displacement of the device. Now, if an axial thrust is exerted on surface 14, directly or through any other mechanical elements not shown since they may be of any desired kind, core 10 will be displaced axially in a direction opposite to that of arrow A in Fig. 9. In said displacement, grooves 13 will slide over arcuate surfaces 33-34 of shaped portions 32 of pins 30. While it would be possible to dispense with such shaped portions and make the pins entirely cylindrical, with a diameter small enough so that they will fit into grooves 13, it is desirable to shape them as described. While grooves 13 slide over portions 32 of pins 30, the pins will rotate to follow the slant of the grooves, and this is permitted by the cylindrical configurations of portions 31 of pins 30 and of bores 24 of housing 11.

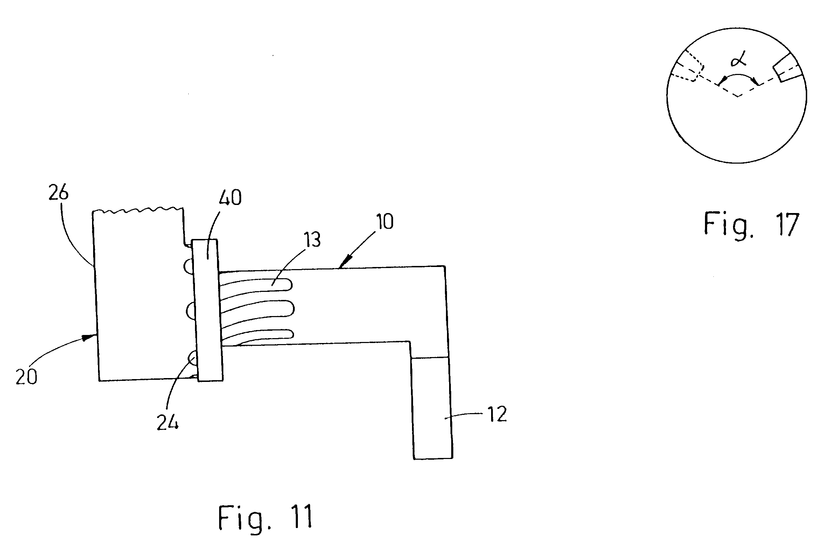

Once core 10 reaches the operative position of Fig. 11, it will be prevented from becoming further displaced in the same direction by any suitable means that may be provided. Two such means are schematically indicated in Fig.16, but they have no particular significance, since they can be replaced by any other mechanical means easily devised by persons skilled in the art. In fact, said means may be omitted altogether, since the controlled device itself may be such as to prevent any displacement beyond the operative position. One of the means schematically shown consists of a ring 43 which may be applied, e.g. by screwing, as at 41, or by any other suitable means, on a terminal extension 42 of core 10 (not shown in any of the other figures, as it will generally be lacking) which extends beyond the threaded portion 15 of core 10, once the core has been inserted into housing 20. Ring 43 will bear against surface 26 of housing 20 and prevent any further displacement of the core. Another means. shown for economy of illustration in the same figure, consists of a stop member 45, schematically illustrated, against which the surface 19 of core 10, which is the end surface of the core on the side of arm 12, will bear, to prevent any further displacement.

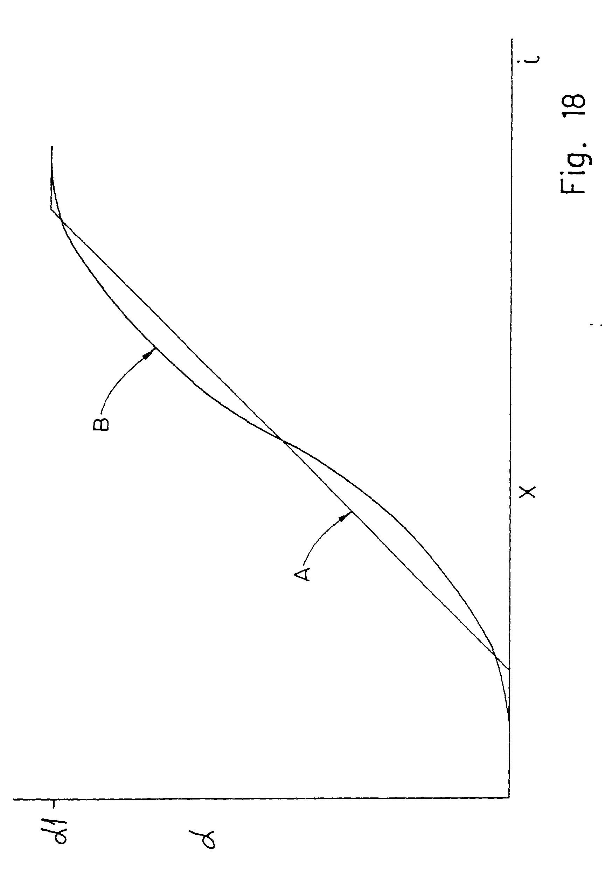

In passing from the inoperative position of Fig. 9 to the operative position of Fig. 11, core 10 will have become angularly displaced by an angle that is measured by the arc on the periphery of core 10 between portions 15 and 17 of the grooves. This angle is illustrated in Fig. 17, wherein a single groove is shown in an end view of the core and the angular position of said groove when the core is in the position of Fig. 9 is shown in full lines while its position is as shown in Fig. 17 in broken lines. Said angle is indicated by α₁. Said angular displacement occurs in the time in which the pins 30 are in engagement with the intermediate, helicoidal portions 16 of grooves 13.

The kinematics of the rotation of core 10 are illustrated in Fig. 18. It will be clear that if the angle α₁ by which the core rotates between its two extreme positions, were 360°, then the axial length of the helicoidal portion 16 of the grooves 13 would be equal to their pitch. Since said portions generally are not perfectly helical, the pitch to be considered is that of a perfect helix the initial and terminal points of which are the same as the initial and terminal points of said portions, viz. the average pitch of the actual helix of the device. The angle α1 therefore is equal to 2π·L/p, wherein L is the axial length of the helical portion 16 of a groove 13, and p is said average pitch. If, at any given moment, α is the angle by which the core has rotated from its initial position, φ is the angle between the tangent to the center line of the portions 16 and the axial direction of the core 10, x is the axial displacement of the core and R its radius. tgφ = R.dα/dx. Therefore, if the portions 16 were perfectly helical, viz. the angle φ were constant, the angle α would be proportional to the axial displacement and the rotation of the core would be represented by the broken line A in Fig. 18, wherein the abscissa is x and the ordinate is α. In the first part of the movement, when the pins 30 are in engagement with the portion 15 of the grooves 13, α remains equal to zero. In the portion in which pins 13 are in engagement with the portion 16 of grooves 13, the angle α is proportional to the axial displacement and therefore a rectilinear slanted portion of the line is generated. In the last part of the motion, when the pins 13 are in engagement with the portions 17 of grooves 13, if such portion actually exists, α remains constant. Since, however, the portions 16 generally are not perfectly helical and they gradually blend into the end portions, the angular displacement is actually represented by the curved line B indicated in the same diagram.

In order to limit frinction losses, the angle φ at the middle of the core displacement, viz. when α = α₁, should preferably be greater than 40°.

The admissible speed of rotation depends mainly on the capability of the device to stand the stresses due to shock which arise at the end of its displacement, when it is stopped.

While preferred embodiments of the invention has been described by way of illustration, it will be understood that they are not limitative and that the invention may be carried into practice with many modifications, variations and adaptations, without departing from its spirit or exceeding the scope of the claims.

## Claims

1. Device for producing angular displacement about an axis in response to thrust exerted along said axis, characterized in that it comprises, in combination, a housing (20) having a cylindrical bore (25) therein; a core (10) of an essentially cylindrical shape, fitting into said bore (25) of said housing (20) and axially and angularly displaceable with respect thereto, in response to an axial thrust, between an inoperative condition and an operative position, said core (10) being provided on its surface with at least one groove (13) having a substantially helicoidal portion (16); and a guide member (30) for each of said grooves (13), said guide member (30) projecting into said cylindrical bore (25) and engaging said groove (13).

2. Device according to claim 1, further having means for actuating, when displaced to its operative position, a controlled device.

3. Device according to claim 1 or 2, comprising a plurality of grooves (13).

4. Device according to claim 1, 2 or 3, comprising means for preventing displacement of said core (10) in a direction opposite to that of its displacement from said inoperative position to said operative position.

5. Device according to claim 4, wherein said means for preventing displacement of said core (10) comprise a closed, substantially rectilinear, terminal axial portion (17) of said grooves (13).

6. Device according to claim 4 or 5, wherein the means for preventing the displacement of the core (10) provide for a self-locking of the device.

7. Device according to any one of the preceding claims, comprising means (43,45) for preventing the core (10) from being displaced beyond its operative position.

8. Device according to any one of the preceding claims, comprising means provided in the core (10) for receiving an axial thrust.

9. Device according to claim 8, wherein the axial thrust receiving means consist in a surface (14) provided at one end of said core (10).

10. Device according to any one of claims 2 to 9, wherein the means for actuating, when the core (10) is displaced to its operative position, the controlled device, comprise an arm (12) carried by the core (10) at or in the vicinity of one end thereof.

11. Device according to claim 10, wherein the arm (12) is carried by the core (10) at the end thereof opposite to that at which a thrust receiving surface (14) is provided.

12. Device according to any one of the preceding claims, wherein the guide members (30) are attachable to the housing (20) in fixed positioned relationship.

13. Device according to claim 12, wherein the guide members (30) are pins that can be inserted into seats of the housing (20).

14. Device according to claim 13, wherein the seats are radial seats opening into the cylindrical bore (25) of the housing (20).

15. Device according to claim 14, wherein the radial seats are cylindrical, the portion (31) of each of the pins (30) inserted in the corresponding seat is cylindrical, and the portion (32) of each of the pins (30) engaging the corresponding groove (13) of the core (10) is shaped so as to match the cross-section of said groove (13).

16. Device according to any one of the preceding claims, wherein the center line of the helicoidal portion (16) of the core groove (13) makes an angle with the axial direction of the core (10) that is greater than 40°.
